# EUROPEAN PATENT APPLICATION

(11) **EP 4 737 066 A1**
(43) Date of publication of application: **06.05.2026**
(21) Application number: 24210411.5
(22) Date of filing: 01.11.2024
(51) Int. Cl.: B25J 5/02, B25J 9/02, B25J 15/00, B65G 1/04

(54) **A GRIPPING DEVICE**

(71) Applicant: AutoStore Technology AS, 5578 Nedre Vats (NO)
(72) Inventor: IVARJORD, Åsmund, 5578 Nedre Vats (NO)
(74) Representative: Kilburn & Strode LLP

(57) **Abstract**

The disclosure relates to an add-on gripping device for use with a robotic vehicle for handling storage containers, the storage containers configured to be stored in storage columns of an automated storage and retrieval system, the add-on gripping device comprising: a surface for a gripping device of the robotic vehicle to grip onto; and a grip element configured to grip an object.

## Description

### TECHNICAL FIELD

The disclosure relates to a gripping device. More particularly, it relates to an add-on gripping device for use with a robotic vehicle for handling storage containers.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles are central to the efficient operation of an automated storage and retrieval system. Developments in the design and operation of such robots can significantly improve the operation of automated storage and retrieval systems. In order to handle containers, a robotic container-handling vehicle must be able to lift containers from the grid, and return containers to the grid using a lifting device configured to engage containers. It would be advantageous to improve the functionality of such robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an example gripping device of a robotic container-handling vehicle that is configured to couple to a container held within a multi-container frame to enable the container to be lifted or lowered by the container-handling vehicle;
Fig. 6 shows an example system comprising a robotic container-handling vehicle alongside an add-on gripping device;
Fig. 7 shows a gripping device of a robotic container-handling vehicle alongside an add-on gripping device;
Fig. 8 shows a portion of an add-on gripping device;
Fig. 9 shows a gripping device of a robotic container-handling vehicle alongside an add-on gripping device, the add-on gripping device having a grip element mounted to a gantry;
Figs. 10 and 11 show a gripping device of a robotic container-handling vehicle alongside an add-on gripping device, the add-on gripping device having a grip element with opposing jaws for gripping a pipe;
Fig. 12 shows a robotic container-handling vehicle with a gripping device having a grip element in the form of a robotic arm;
Fig. 13 shows a robotic container-handling vehicle with a gripping device;
Fig. 14 shows a storage system comprising a grid with add-on gripping device stations;
Figs. 15 and 16 show a robotic container-handling vehicle with a gripping device having a grip element with opposing jaws for gripping a pipe; and
Figs. 17 and 18 show a robotic container-handling vehicle with a gripping device having a grip element mounted to a gantry.

Throughout the description and drawings, like reference numerals refer to like features.

### DETAILED DESCRIPTION

In overview, the disclosure relates to an add-on gripping device for use with a robotic vehicle for handling storage containers, the storage containers configured to be stored in storage columns of an automated storage and retrieval system. The add-on gripping device has a surface for a gripping device of the robotic vehicle to grip onto and a grip element configured to grip an object. Advantageously, such an add-on gripping device enables a robotic container-handling vehicle to equip itself with alternative gripping means, such as a grip element mounted to a gantry, opposing jaws for gripping a pipe, or a robotic arm. In this manner, the add-on gripping device improves the functionality of such robots. The disclosure also relates to robotic vehicle, a system comprising a robotic vehicle and an add-on gripping device and a gripping device for a robotic vehicle.

### Automated storage and retrieval system overview

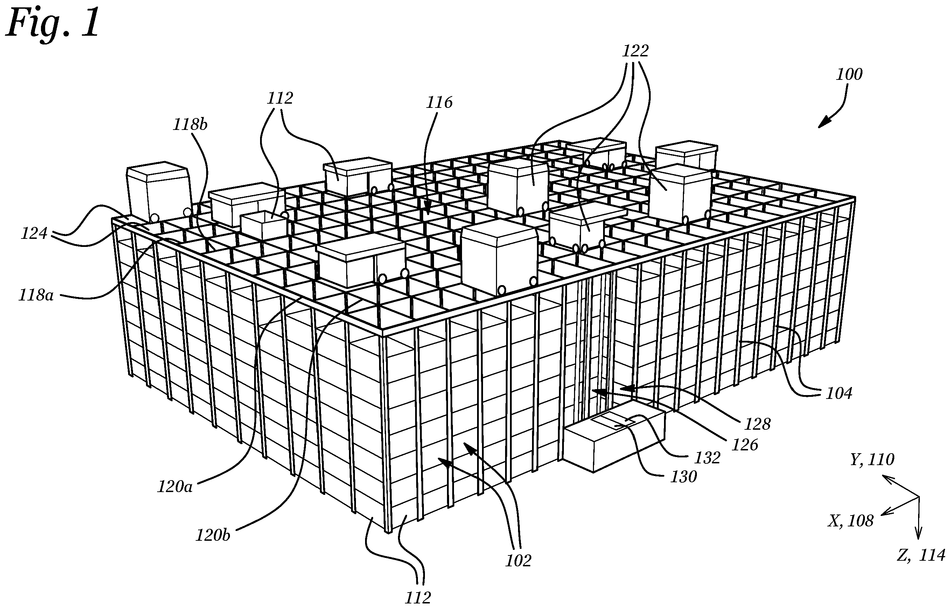

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

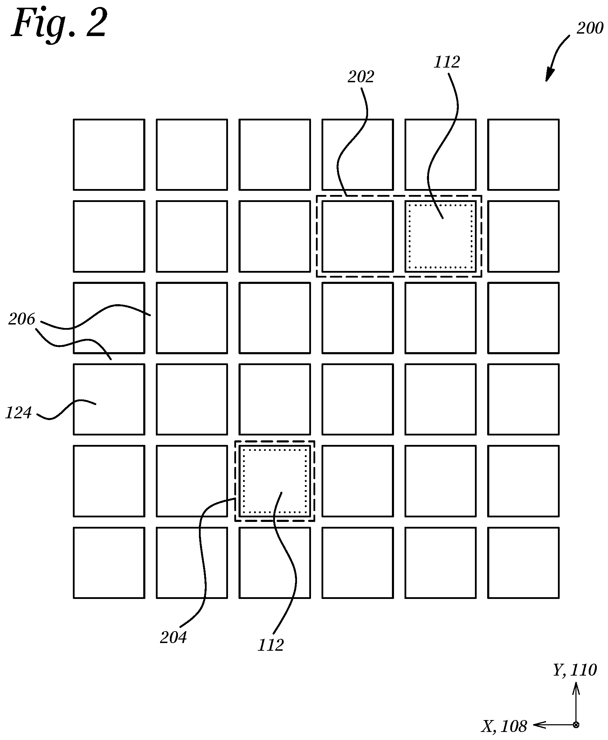

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

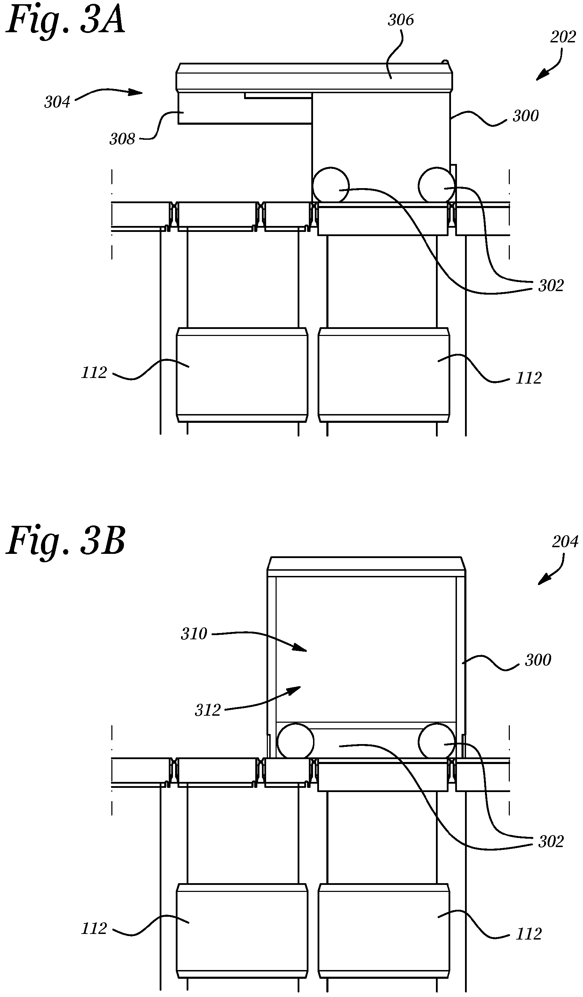

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

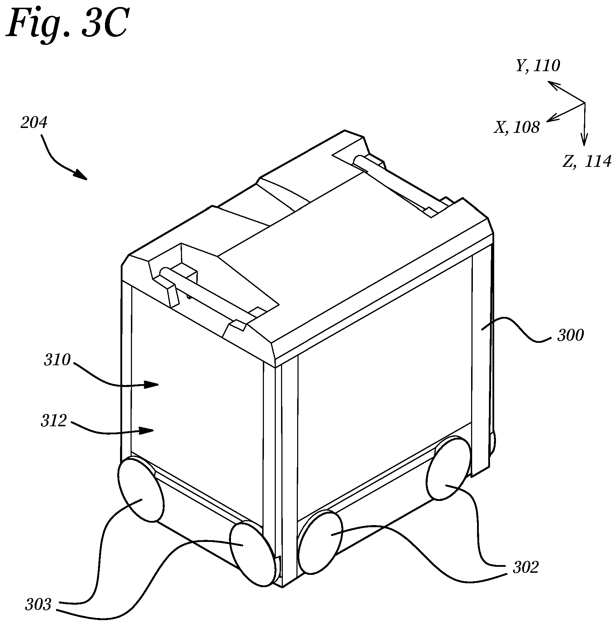

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

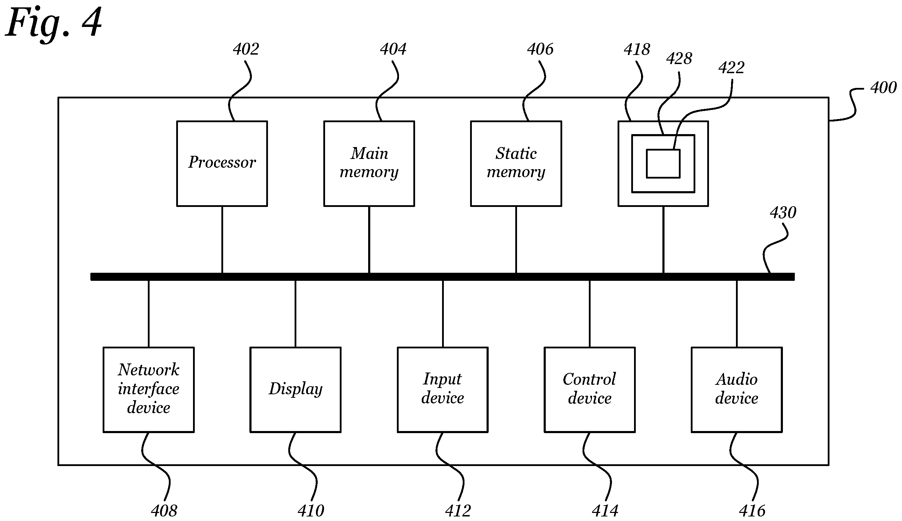

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The present disclosure relates to an add-on gripping device for use with a robotic vehicle for handling storage containers. The add-on gripping device can be used by both a 'cantilever' type of robotic vehicle 202 and an 'internal cavity' type of robotic vehicle 204 of the type shown in Figs. 3A and 3B. It can also be used with any robot having a gripping device.

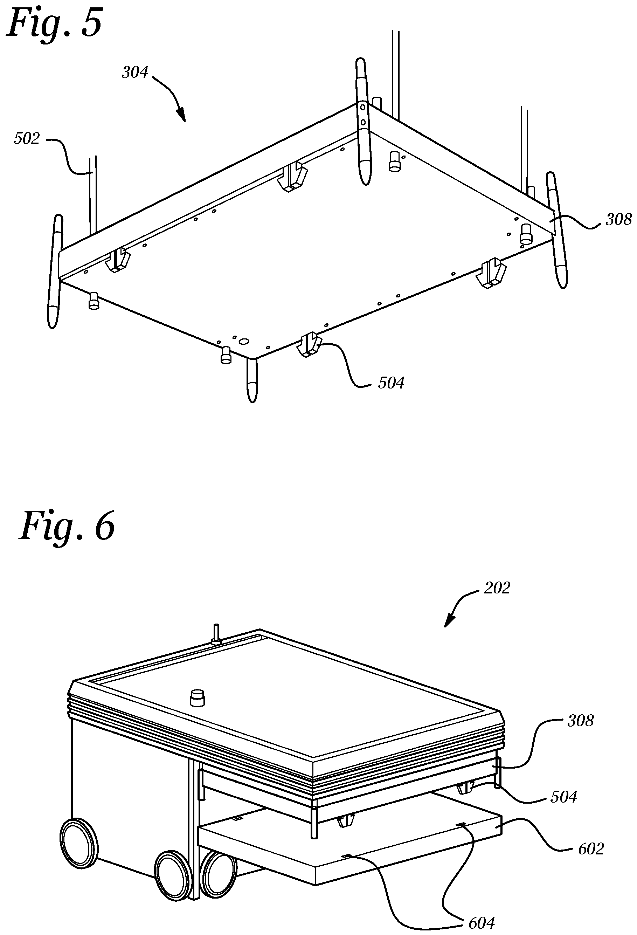

Turning now to Fig. 5, a gripping device 308 of a lifting device 304 is shown. The gripping device 308 may be part of the lifting device 304 of container-handling vehicle 202 or the lifting device 312 of container-handling vehicle 204. The gripping device 308 is configured to engage a storage container 112 (not shown in Fig.5) for lifting or lowering the storage container 112 relative to columns 102 of the grid 100 (not shown in Fig.5).

The gripping device 308 may comprise a lifting frame connected to lifting bands 502, which are windable/winchable from at least one lifting shaft (not shown in Fig.5) of the robotic container-handling vehicle 202, 204 to lift or lower the gripping device 308. The lifting frame comprises a horizontal element, as depicted, and grippers 504 arranged on the lifting frame. The grippers 504 are configured to releasably engage connecting recesses arranged in an upper rim of a storage container 112. The grippers 504 comprise two or more elements movable relative to one another to provide a gripping force.

### Add-on gripping device

Fig. 6 shows a 'cantilever' type of robotic vehicle 202 having a gripping device 308 of the type shown in Fig. 5 alongside an add-on gripping device 602. The add-on gripping device 602 has a frame comprising a horizontal element, as depicted, that has recesses 604 arranged on its upper surface for receiving the grippers 504 of the gripping device 308 so that the gripping device 308 can grip the add-on gripping device 602. In this manner, the add-on gripping device 602 can be picked up by the a gripping device 308 of a robotic vehicle 202 in the same way that the gripping device 308 would pick up a storage container 112. The add-on gripping device 602 can be provided with one or more grip elements (not shown in Fig. 6) and in this way it can, in effect, retrofit a robotic vehicle 202, 204 with alternative grip elements to the grippers 504. As shown in Fig. 6, the add-on gripping device 602 is arranged to sit below the gripping device 308 when gripped by the gripping device 308.

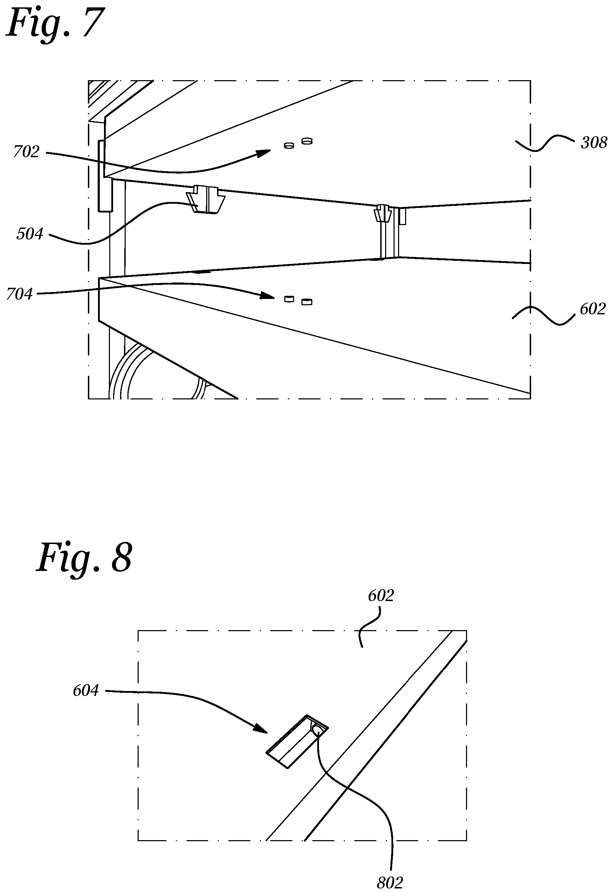

Fig. 7 shows the gripping device 308 of a robotic container-handling vehicle 202, 204 alongside an add-on gripping device 602. The gripping device 308 comprises an interface 702 for transmitting control inputs from the robotic vehicle 202, 204 for controlling a grip element (not shown in Fig. 7) of the add-on gripping device 602. The interface 702 can be electronic of mechanical. The depicted interface 702 is electronic and comprises an electrical contact for contacting a corresponding electrical contact 704 on the add-on gripping device 602 and for receiving control inputs from the robotic vehicle when the gripping device of the robotic vehicle 202, 204 grips the add-on gripping device 602.

Where a mechanical interface is provided, this could comprise an actuator on the gripping device 308 configured to couple with a corresponding element on the add-on gripping device 602, where actuation of the actuator moves the corresponding element to cause actuation of a grip element of the add-on gripping device 602. For example, the grip element could be biased in a closed position and actuation of the actuator could move the corresponding element in the add-on gripping device 602 to cause actuation of a grip element to an open position. After actuation of the actuator ceases, the grip element returns to closed position due to the aforementioned biasing.

Fig. 8 shows an example of an add-on gripping device 602 where the interface or electrical contact 802 for receiving control inputs from the robotic vehicle is located within one or more of the aforementioned recesses 604. In this example, the grippers 504 of the gripping device 308 have a corresponding interface or electrical contact for contacting the electrical contact 802 and transmitting control inputs from the robotic vehicle 202, 204 for controlling a grip element (not shown in Fig. 8) of the add-on gripping device 602.

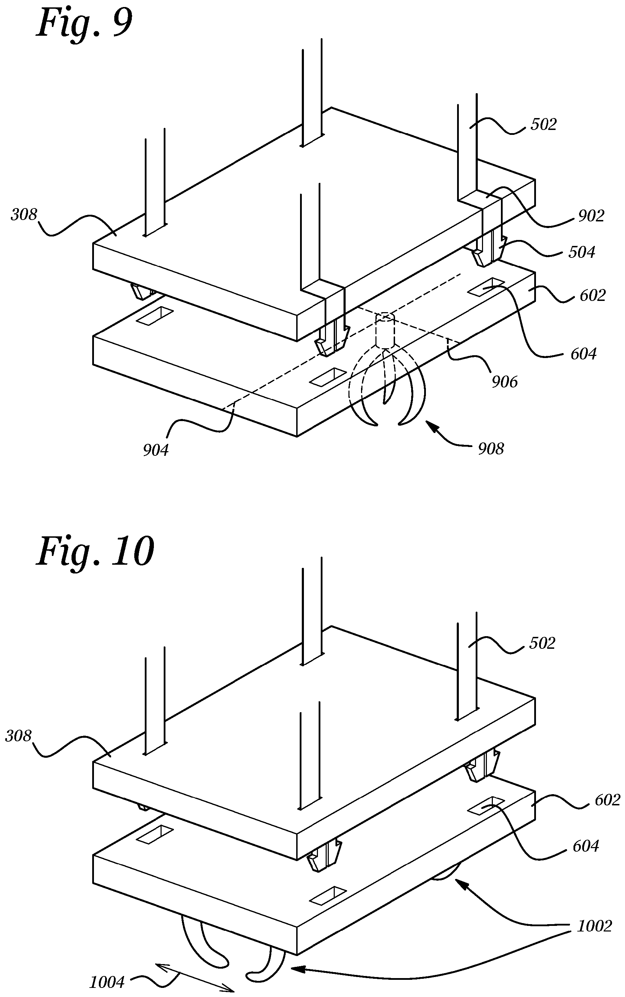

Fig. 9 shows a gripping device 308 of a robotic container-handling vehicle 202, 204 alongside an add-on gripping device 308, the add-on gripping device 602 having a grip element 908 in the form of a gripping claw (although any type of grip element described herein may be provided). The grip element 908 is mounted or otherwise coupled to a gantry system, which is in turn mounted or coupled to the add-on gripping device 602. The grip element 908 shown in Fig. 9 is in the form of a gripping claw having three gripping prongs, although four or more gripping prongs could also be provided.

The gantry system is able to move the grip element 908 along two linear axes: X and Y. The lifting bands 502 facilitate movement of the grip element 908 along the Z axis through raising and lowering of the gripping device 308 and, therefore, the add-on gripping device 602 when gripped by the gripping device 308. The X, Y and Z axes refer respectively to, a first direction 904 (e.g a horizontal movement or a movement from left to right), a second direction 906 orthogonal to the first direction (e.g. a horizontal movement or a movement from the front to the back), and third direction orthogonal to both the first and second directions (e.g. vertical movement or a movement up and down). The gantry system may comprise one or more of a rail system, frame, crane, lifting device or other suitable means for facilitating the above outlined movement of the grip element 908.

The gripping device 308 is connected to lifting bands 502 along which control signals can be transmitted from the robotic container-handling vehicle 202, 204 to the gripping device 308 for controlling the grippers 504 of the gripping device 308. An electrical path 902 is provided between the lifting bands 502 and an electrical contact on the grippers 504 (as described in relation to Fig. 8 above). In this way control inputs from the robotic vehicle 202, 204 can be transmitted to the add-on gripping device 602 for controlling the grip element 908 and the gantry system via the one or more electrical contacts 802 (shown in Fig. 8) located within one or more of the recesses 604. Any of the gripping devices 308 of a robotic container-handling vehicle 202, 204 described herein may be provided with such electrical paths 902.

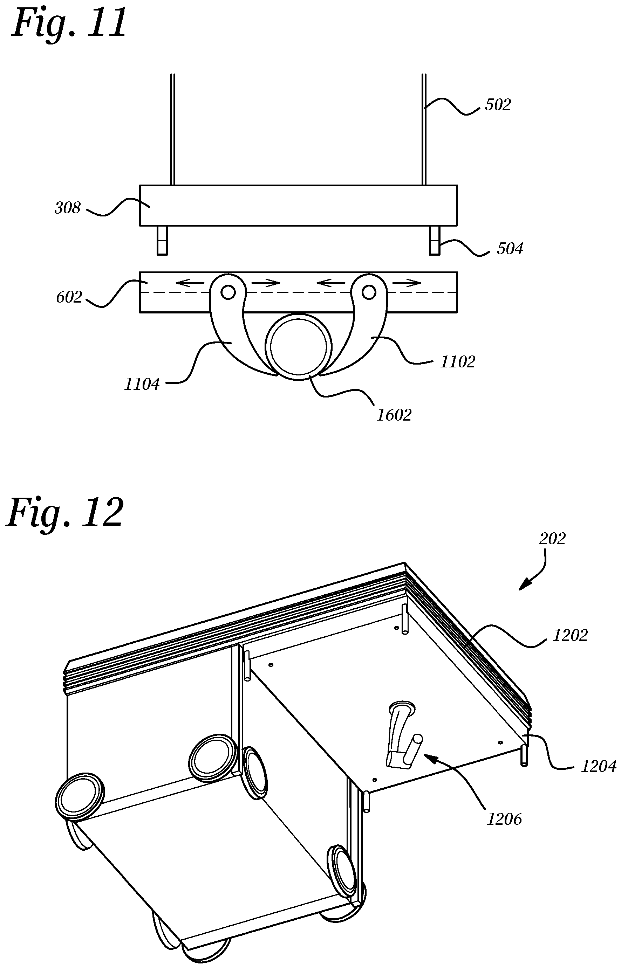

Figs. 10 and 11 show a gripping device 308 of a robotic container-handling vehicle alongside an add-on gripping device 602, the add-on gripping device 608 having a grip element with two sets of opposing jaws 1002 for gripping a pipe 1602. The opposing jaws 1002 are able to open and close in the direction 1004 in order to grip and release a pipe 1602, or any other similarly shaped item. In the add-on gripping device 602 shown in Figs. 10 and 11, two sets of opposing jaws 1102, 1104 are provided. In some examples, three or more set of opposing jaws are provided or one set of opposing jaws can also be provided.

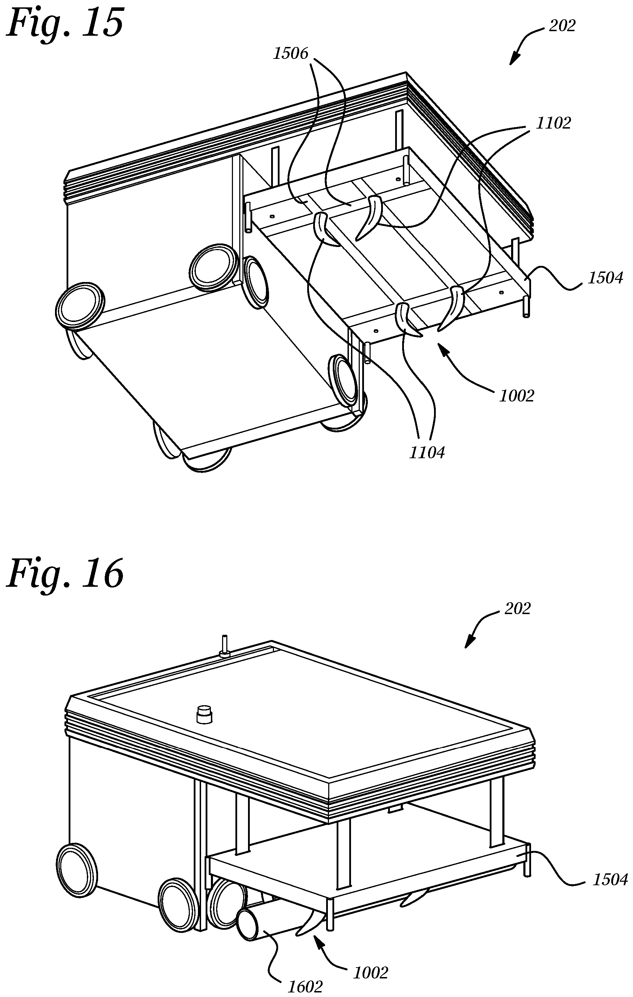

As shown in Fig. 11, each jaw 1102, 1104 of the opposing jaws 1002 is configured such that a distance between the a base of the jaws 1102, 1104 where they are coupled to the add-on gripping device 602 can be adjusted. This enables pipes 1602 or similarly shaped objects with different diameters to be securely gripped by the jaws 1102, 1104. The base of the jaws 1102, 1104 may be mounted to a rail system or similar in turn mounted to the add-on gripping device 602 in order to permit the relative movement of the jaws 1102, 1104 to change the distance between the a base of the jaws 1102, 1104. In an alternative implementation, the add-on gripping device 602 can be provided with the gantry system 1506 shown in Fig. 15 and described below to facilitate adjusting of the distance between the base of the jaws 1102, 1104 in each set of opposing jaws 1002 and also the distance between the sets of opposing jaws 1002 themselves. In this manner, the opposing jaws 1002 can be adjusted so that both longer and shorter pipes 1602 or similarly shaped objects can be securely gripped.

### Gripping device

The present disclosure also relates to a gripping device for use with a robotic vehicle for handling storage containers. The gripping device can be used as the gripping device for both a 'cantilever' type of robotic vehicle 202 and an 'internal cavity' type of robotic vehicle 204 of the type shown in Figs. 3A and 3B. It can also be used as the gripping device for any suitable robot for use with an automated storage and retrieval system.

Fig. 12 shows a robotic container-handling vehicle 202 with an alternative gripping device 1204 connected directly to the lifting device 1202 via lifting bands (not shown in Fig. 12). The gripping device 1204 has a grip element in the form of a robotic arm 1206. The lifting device 1202 is the same as the lifting device 304 described above, but with a gripping device 1204 having a grip element in the form of a robotic arm 1206, rather than for gripping storage containers 112. The depicted robotic arm 1206 is a 3-axis robotic arm. Alternatively, a 5 axis robotic arm could be provided.

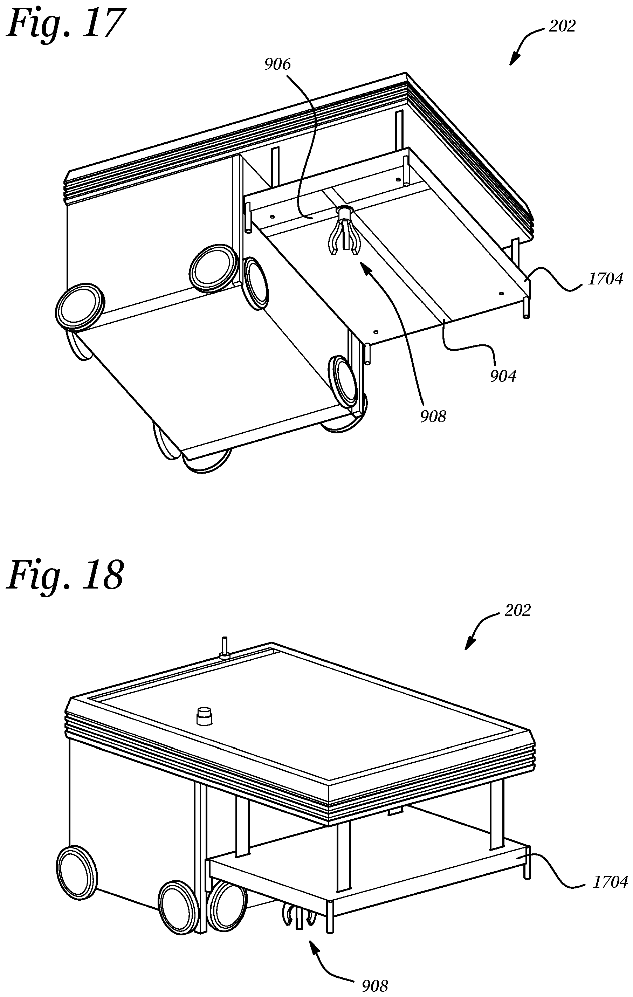

Although a 'cantilever' type of robotic vehicle 202 is shown in Fig. 12, the gripping device 1204 could equally be provided on an 'internal cavity' type of robotic vehicle 204. It can also be used with any robot having a gripping device. The same is true of the gripping device 308 (shown in Fig. 5), gripping device 1504 (shown in Figs. 15 and 16), and gripping device 1704 (shown in Figs. 17 and 18).

It will be understood that the robotic arm 1206 could be provided as the grip element on an add-on gripping device 602 of the type described above.

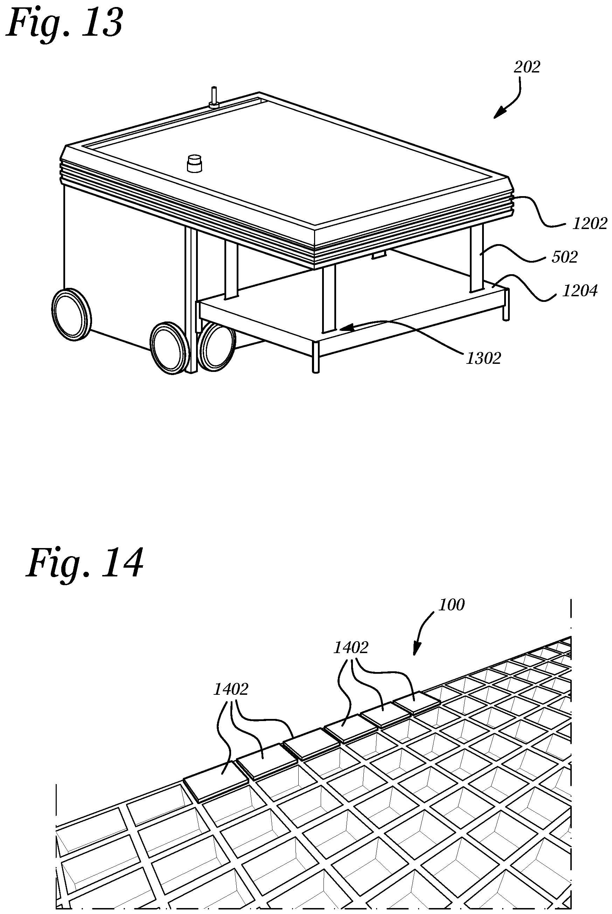

Fig. 13 shows the robotic container-handling vehicle 202 with the gripping device 1204 shown in Fig. 12. The gripping device 1204 can be removed from the lifting bands 502 via at least one attachment point 1302. The attachment point 1302 may comprise screws or other securing means that facilitate attachment and removal of the gripping device 1204 from the container-handling vehicle 202. This enables other gripping devices, such as gripping device 308 (shown in Fig. 5), gripping device 1504 (shown in Figs. 15 and 16), and gripping device 1704 (shown in Figs. 17 and 18), to be coupled or attached to (and removed from) the robotic container-handling vehicle 202.

Fig. 14 shows a storage system comprising a grid 100 of the type described above with add-on gripping device stations 1402 on the grid 100. These add-on gripping device stations are locations were add-on gripping devices 602 of the type described above can be dropped off, stored and picked up by robotic container-handling vehicle 202, 204 operating on the grid 100.

In some example implementations, gripping device stations can be provided on the grid 100 to provide locations were gripping devices 308, 1204, 1504, 1704 of the type described herein can be detached from, stored and attached to a robotic container-handling vehicle 202, 204 operating on the grid 100.

Figs. 15 and 16 show a robotic container-handling vehicle 202 with a gripping device 1504 having a grip element with two sets of opposing jaws 1002 for gripping a pipe 1602. In the gripping device 1504 shown in figs. 15 and 16, each jaw 1102, 1104 of the opposing jaws 1002 is coupled to a gantry system 1506 as shown in Fig. 15.

The gantry system 1506 is able to move each jaw 1102, 1104 of the opposing jaws 1002 along two linear axes: X and Y, with the lifting bands 502 facilitating movement of the opposing jaws 1002 along the Z axis. The gantry system 1506 is able to not only able adjust the distance between the a base of the jaws 1102, 1104 where they are coupled to the add-on gripping device 602 via the gantry system 1506, it is also able to adjust the distance between the two sets of jaws 1002 so that longer and shorter pipes 1602 or similarly shaped objects can be securely gripped.

As with the robotic container-handling vehicle 202 shown in Fig. 13, the gripping device 1204 can be removed from the lifting bands 502 via attachment point 1302.

Figs. 17 and 18 show a robotic container-handling vehicle 202 with a gripping device 1704 having a grip element 908 in the form of a gripping claw (although any type of grip element described herein may be provided). The grip element 908 is mounted or otherwise coupled to a gantry system which is in turn mounted or coupled to the gripping device 1704. The gantry system is the same as the gantry system shown in Fig. 9 and described above, but it is mounted to the gripping device 1704, rather than an add-on gripping device 602, as shown in Fig. 9.

As with the robotic container-handling vehicle 202 shown in Fig. 13, the gripping device 1704 can be removed from the lifting bands 502 via attachment point 1302.

### Penultimate comments

In some example implementations, an add-on gripping device is provided for use with a robotic vehicle for handling storage containers, the storage containers configured to be stored in storage columns of an automated storage and retrieval system, the add-on gripping device comprising: a surface for a gripping device of the robotic vehicle to grip onto; and a grip element configured to grip an object. Advantageously, the add-on gripping device facilitates the use of alternative gripping elements by a robotic vehicle without the need to manually change the gripping device of a robotic vehicle.

In some example implementations, the add-on gripping device further comprises an interface for receiving control inputs for controlling the grip element from the robotic vehicle when the gripping device grips the add-on gripping device. Advantageously, control inputs can be received from the robotic vehicle so that the grip element can be controlled by the robotic vehicle.

In some example implementations, the control inputs comprise electronic control signals.

In some example implementations, the control inputs comprise mechanical control inputs.

In some example implementations, the add-on gripping device comprises an interface for receiving a mechanical control input from the robotic vehicle when the gripping device grips the add-on gripping device.

In some example implementations, the communication interface comprises an electrical contact configured to contact a corresponding electrical contact on the gripping device when the gripping device grips the add-on gripping device. Advantageously, control signals can be received from the robotic vehicle for controlling the grip element via the electrical contact.

In some example implementations, the add-on gripping device comprises a gantry system, wherein the grip element is mounted to the gantry system. Advantageously, the gantry system enables the grip element to be positioned at different locations enabling more flexibility of use of the grip element.

In some example implementations, the gantry system is configured to move the grip element in a first direction and, optionally, a second direction orthogonal to the first direction. Advantageously, the grip element can be placed in a variety of locations in an x-y plane enabling more flexibility of use of the grip element.

In some example implementations, the first direction and the second direction are in a horizontal x-y plane.

In some example implementations, a lifting device of the robotic vehicle can be used to move the add-on gripping device in a third direction orthogonal to both the first direction and the second direction. In some example implementations, the third direction is a z direction or a vertical direction.

In some example implementations, the add-on gripping device further comprises a recess, wherein the surface for the gripping device of the robotic vehicle to grip onto is located within the recess. In some example implementations, the recess is in an upper surface of the add-on gripping device.

In some example implementations, the add-on gripping device is configured to be held below the gripping device of the robotic vehicle when gripped by the gripping device.

In some example implementations, the grip element comprises opposing jaws for gripping a pipe. Advantageously, the add-on gripping enables a robotic vehicle to equip itself with a grip element capable of gripping a pipe.

In some example implementations, the opposing jaws are configured such that a distance between the a base of the jaws can be adjusted. Advantageously, the distance between a base of the jaws of the gripping element can be adjusted such that pipes of differing diameters can be securely gripped by the jaws.

In some example implementations, the add-on gripping device comprises a gantry system, wherein the opposing jaws are mounted to the gantry system.

In some example implementations, the gantry system is configured to move the opposing jaws in a first direction and, optionally, a second direction orthogonal to the first direction.

In some example implementations, the grip element further comprises a second set of opposing jaws.

In some example implementations, the second set of opposing jaws are configured such that a distance between the a base of the jaws can be adjusted.

In some example implementations, the gantry system is configured to adjust the distance between the a base of the opposing jaws and/or the second set of opposing jaws.

In some example implementations, the gantry system is configured to adjust the distance between the opposing jaws and a second set of opposing jaws. Advantageously, the distance between the opposing jaws and a second set of opposing jaws can be adjusted so that both longer and shorter pipes or similarly shaped objects can be securely gripped grip element.

In some example implementations, the gripping element comprises a robotic arm. Advantageously, the add-on gripping device configures in this way enables a robotic vehicle to equip itself with a grip element in the form of a robotic arm.

In some example implementations, the robotic arm is a 3-axis robotic arm, optionally wherein the robotic arm is a 5 axis robotic arm.

In some example implementations, a robotic vehicle for handling storage containers is provided, the storage containers configured to be stored in storage columns of an automated storage and retrieval system. The robotic vehicle comprises: a drive system for moving the robotic vehicle on rails of a rail system above the storage columns; a gripping device comprising grippers for engaging a storage container; and a lifting device for raising and lowering the gripping device. The gripping device comprises an interface for providing inputs for controlling a grip element of an add-on gripping device from the robotic vehicle when the gripping device grips the add-on gripping device. Advantageously, the robot is able to provide control signals to an add-on gripping device, for example, to control a gripping element of the add-on gripping device.

In some example implementations, the lifting device comprises lifting bands coupled to the gripping device.

In some example implementations, the interface is electrically coupled to the lifting bands such that control signals can be passed to the add-on gripping device via the lifting bands.

In some example implementations, a system comprising a robotic vehicle as set out above and an add-on gripping device as set out above is provided.

In some example implementations, a gripping device is provide suitable for a robotic vehicle comprising a lifting device for raising and lowering the gripping device, the robotic vehicle for handling storage containers, the storage containers configured to be stored in storage columns of an automated storage and retrieval system. The gripping device comprises: a grip element configured to grip an object.

In some example implementations, the gripping device comprises a gantry system, wherein the grip element is mounted to the gantry system.

In some example implementations, the gantry system is configured to move the grip element in an x direction and, optionally, a y direction.

In some example implementations, the gantry system is as described above for the add-on gripping device.

In some example implementations, the grip element comprises opposing jaws for gripping a pipe.

In some example implementations, the opposing jaws are configured such that a distance between the a base of the jaws can be adjusted.

In some example implementations, the gripping device comprises a gantry system, wherein the opposing jaws are mounted to the gantry system.

In some example implementations, the gantry system is configured to move the opposing jaws in an x direction and, optionally, a y direction.

In some example implementations, the gripping element comprises a robotic arm.

In some example implementations, the robotic arm is a 3-axis robotic arm, optionally wherein the robotic arm is a 5 axis robotic arm.

In some example implementations, a robotic vehicle for handling storage containers is provided, the storage containers configured to be stored in storage columns of an automated storage and retrieval system, the robotic vehicle comprising: a drive system for moving the robotic vehicle on rails of a rail system above the storage columns; the gripping device of any of claims 16 to 24; and a lifting device for raising and lowering the gripping device.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An add-on gripping device for use with a robotic vehicle for handling storage containers, the storage containers configured to be stored in storage columns of an automated storage and retrieval system, the add-on gripping device comprising:
a surface for a gripping device of the robotic vehicle to grip onto; and
a grip element configured to grip an object.

2. The add-on gripping device of claim 1, further comprising an interface for receiving control inputs for controlling the grip element from the robotic vehicle when the gripping device grips the add-on gripping device.

3. The add-on gripping device of claim 2, wherein the control inputs comprise one or more of:
electronic control signals; and
mechanical control inputs.

4. The add-on gripping device of claim 2 or claim 3, wherein the interface comprises one or more of:
an electrical contact configured to contact a corresponding electrical contact on the gripping device when the gripping device grips the add-on gripping device; and
an element configured to couple with an actuator on the gripping device, where actuation of the actuator moves the corresponding element to cause actuation of the grip element.

5. The add-on gripping device of any preceding claim, further comprising a gantry system, wherein the grip element is mounted to the gantry system.

6. The add-on gripping device of claim 5, wherein the gantry system is configured to move the grip element in a first direction and, optionally, a second direction orthogonal to the first direction.

7. The add-on gripping device of any preceding claim, wherein the grip element comprises opposing jaws.

8. The add-on gripping device of claim 7, wherein the grip element further comprises a second set of opposing jaws.

9. The add-on gripping device of claim 7 or claim 8, wherein the opposing jaws are configured such that a distance between the a base of the jaws can be adjusted.

10. The add-on gripping device of any of claims 7 to 9, further comprising a gantry system, wherein the gantry system is configured to:
adjust the distance between the base of the opposing jaws and/or a second set of opposing jaws; and/or
adjust the distance between the opposing jaws and the second set of opposing jaws.

11. The add-on gripping device of any preceding claim, wherein the gripping element comprises:
a robotic arm; and/or
a gripping claw.

12. The add-on gripping device of any preceding claim, further comprising a recess, wherein the surface for the gripping device of the robotic vehicle to grip onto is located within the recess.

13. A robotic vehicle for handling storage containers, the storage containers configured to be stored in storage columns of an automated storage and retrieval system, the robotic vehicle comprising:
a drive system for moving the robotic vehicle on rails of a rail system above the storage columns;
a gripping device comprising grippers for engaging a storage container; and
a lifting device for raising and lowering the gripping device,
wherein the gripping device comprises an interface for providing inputs for controlling a grip element of an add-on gripping device from the robotic vehicle when the gripping device grips the add-on gripping device.

14. The robotic vehicle of claim 13, wherein the lifting device comprises lifting bands coupled to the gripping device, wherein the interface is electrically coupled to the lifting bands such that electronic control signals can be passed to the add-on gripping device via the lifting bands.

15. A system comprising a robotic vehicle according to either of claims 13 and 14 and an add-on gripping device according to any of claims 1 to 12.
